(19) Europäisches Patentamt / European Patent Office / Office européen des brevets

(11) **EP 4 300 728 A1**

(12) **EUROPEAN PATENT APPLICATION**
published in accordance with Art. 153(4) EPC

(43) Date of publication:
**03.01.2024  Bulletin 2024/01**

(21) Application number: **21928062.5**

(22) Date of filing: **30.11.2021**

(51) International Patent Classification (IPC):
**H01S 3/067** [(2006.01)]

(52) Cooperative Patent Classification (CPC):
**H01S 3/067**

(86) International application number:
**PCT/JP2021/043717**

(87) International publication number:
**WO 2022/180969 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021  JP 2021026988**

(71) Applicant: **Fujikura Ltd.**
**Tokyo 135-8512 (JP)**

(72) Inventors:
• **NISHIMURA, Ryoichi**
  **Sakura-shi, Chiba 285-8550 (JP)**
• **ICHII, Kentaro**
  **Sakura-shi, Chiba 285-8550 (JP)**

(74) Representative: **Plasseraud IP**
**66, rue de la Chaussée d'Antin**
**75440 Paris Cedex 09 (FR)**

(54) **FIBER LASER**

(57)    Provided is a fiber laser which reduces the probability of a decrease in beam output power due to TMI and also reduces the probability of occurrence of stimulated Raman scattering. A fiber laser (1) includes: a gain fiber (11) having a core doped with Yb; and a forward pumping light source group (15a) capable of generating forward pumping light that is capable of being inputted into the gain fiber (11) and that belongs to a 976-nm band. An absorption amount of the forward pumping light in a section (I1) of the gain fiber (11), which is a section having a length of 1 m and including an end face on which the forward pumping light is incident, is not less than 253 W and not more than 1100 W.

FIG. 1

**EP 4 300 728 A1**

**Description**

Technical Field

The present invention relates to a fiber laser including a gain fiber having a core doped with Yb.

Background Art

Fiber lasers each including, as a gain fiber, a double cladding fiber having a core doped with ytterbium (Yb) are widely used. Primary absorption bands of Yb in glass are a 915-nm band and a 976-nm band. Thus, such fiber lasers each has a configuration in which pumping light belonging to the 915-nm band or 976-nm band is supplied to the cladding of the gain fiber, to excite Yb with which the core is doped (to cause transition to the population inversion state). To increase the output power of such a fiber laser, the power of pumping light may be increased and the concentration of Yb may be increased, so as to achieve sufficient amplification in the gain fiber.

Citation List

[Non-patent Literature]

[Non-patent Literature 1]
C. Jauregui et al., "Physical origin of mode instabilities in high-power fiber laser systems", Opt. Express 20(12) 12912-12925 (2012)

Summary of Invention

Technical Problem

In such a fiber laser, there may be problems in that the increase in power of pumping light and the increase in the concentration of Yb may lead transverse mode instability (TMI) to occur, which increases the rate of light in higher order mode included in laser light outputted from the fiber laser, that is, which decreases beam output power of the laser light outputted from the fiber laser (Non-Patent Literature 1). In addition, there may be problems in that, if a mode filter for removing higher order mode light is used to prevent a decrease in beam output power, the power of laser light outputted from the fiber laser decreases.

For example, a mechanism by which beam output power decreases when the TMI occurs can be explained as follows. That is, inter-mode interference between the fundamental mode and the higher order mode guided through the core occurs; this causes the signal light amount to spatially vary along the longitudinal direction of the gain fiber. This makes the induced emitted amount spatially vary along the longitudinal direction of the gain fiber, so that the amount of heat generation due to quantum defect spatially varies along the longitudinal direction of the gain fiber. As a result, the temperature spatially varies along the longitudinal direction of the gain fiber, so that the refractive index spatially varies along the longitudinal direction of the gain fiber. This variation in refractive index facilitates the transition from the fundamental mode to the higher order mode, so that the abovementioned decrease in beam output power occurs.

To prevent a decrease in beam output power caused by the TMI without changing the total amount of Yb, one option is to increase the length of the gain fiber. However, the increase in the length of the gain fiber may give rise to another problem that stimulated Raman scattering, which causes a failure of the pumping light source, may be likely to occur.

An aspect of the present invention has been made in view of such circumstances, and an object of the aspect is to realize a fiber laser which reduces the probability of a decrease in beam output power due to the TMI and also reduces the probability of occurrence of stimulated Raman scattering.

Solution to Problem

A fiber laser in accordance with an aspect of the present invention employs a configuration in which the fiber laser including: a gain fiber having a core doped with Yb; and a forward pumping light source group capable of generating forward pumping light that is capable of being inputted into the gain fiber and that belongs to a 976-nm band, wherein an absorption amount of the forward pumping light in a section of the gain fiber, the section having a length of 1 m and including an end face on which the forward pumping light is incident, is not less than 253 W and not more than 1100 W as calculated according to $\int P(\lambda)A(\lambda)d\lambda$.

Herein, $P(\lambda)$ [W] is a power spectrum of the forward pumping light, and $A(\lambda)$ [%/m] is an absorption rate spectrum of Yb with which the core of the gain fiber is doped.

A fiber laser in accordance with another aspect of the present invention employs a configuration in which the fiber laser including: a gain fiber having a core doped with Yb; and a forward pumping light source group capable of generating forward pumping light that is capable of being inputted into the gain fiber and that belongs to a 976-nm band, wherein an absorption amount of the forward pumping light in a section of the gain fiber, the section having a length of 1 m and including an end face on which the forward pumping light is incident, is not less than 253 W and not more than 1100 W, when the absorption amount of the forward pumping light in the section is an actually measured value of the absorption amount of the forward pumping light.

Advantageous Effects of Invention

According to an aspect of the present invention, it is possible to realize a fiber laser which reduces the probability of a decrease in beam output power due to the TMI and also reduces the probability of occurrence of stimulated Raman scattering.

Brief Description of Drawings

Fig. 1 is a block diagram illustrating a configuration of a fiber laser in accordance with an embodiment of the present invention.

Fig. 2 is a graph illustrating, regarding multiple fiber lasers prepared as samples, the relationship between the pumping light absorption amount in section I1 and the rejection rate.

Fig. 3 is a graph illustrating a standard absorption amount spectrum [dB/m] of Yb.

Fig. 4 is a graph illustrating, regarding multiple fiber lasers prepared as samples, the distribution of accepted products and rejected products, in which the horizontal axis represents the pumping light absorption amount [dB/m] per unit length of a gain fiber at a wavelength of 978 nm, and the vertical axis represents the absorption amount of forward pumping light emitted from a forward pumping light source (LDM forward pumping light absorption amount).

Fig. 5 is a graph illustrating the concentration distribution of each element in the gain fiber in accordance with an Example shown in Table 8.

Fig. 6 is a graph illustrating the distribution of relative refractive index of the gain fiber in accordance with the Example shown in Table 8.

Fig. 7 is a graph illustrating the cladding absorption amount spectrum in accordance with the Example shown in Table 8.

Description of Embodiments

(Configuration of fiber laser)

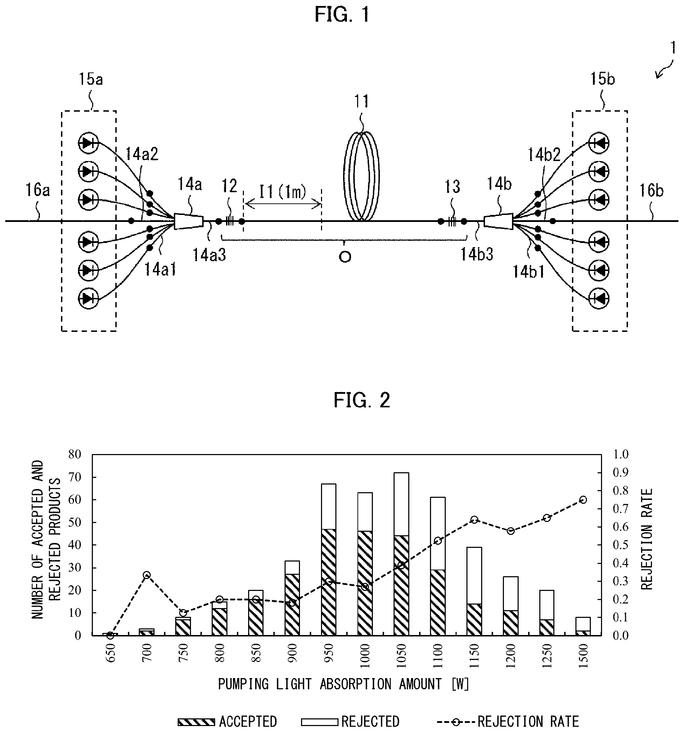

A configuration of a fiber laser 1 in accordance with an embodiment of the present invention will be described with reference to Fig. 1. Fig. 1 is a block diagram illustrating the configuration of the fiber laser 1.

As illustrated in Fig. 1, the fiber laser 1 includes a gain fiber 11, a high-reflective mirror 12, a low-reflective mirror 13, a forward pumping combiner 14a, a backward pumping combiner 14b, a forward pumping light source group 15a, a backward pumping light source group 15b, an input fiber 16a, and an output fiber 16b.

The gain fiber 11 is an optical fiber that has a function of amplifying laser light with use of energy of pumping light. According to the present embodiment, as the gain fiber 11, used is an Yb-doped double cladding fiber, which is an optical fiber that has a columnar core doped with ytterbium (Yb), a tubular inner cladding surrounding the core, and a tubular outer cladding surrounding the inner cladding. The cross-sectional shape of the inner cladding may be polygonal, or may be D-shaped. This enables efficient absorption of pumping light without decreasing the absorption rate of the pumping light, even in a case in which the gain fiber 11 is long. The distribution of refractive index of the gain fiber 11 is set so that the gain fiber 11 propagates one fundamental mode and at least one higher order mode. In addition, the gain fiber 11 includes no fusion-spliced point, and has a constant refractive index distribution and a constant Yb concentration throughout its length. This configuration enables elimination of connection loss, so that it is possible to reduce the total loss occurring in the gain fiber 11.

To one end of the gain fiber 11, the high-reflective mirror 12 is connected (by fusion splicing, in the present embodiment). To the other end of the gain fiber 11, the low-reflective mirror 13 is connected (by fusion splicing, in the present embodiment). According to the present embodiment, fiber Bragg gratings (FBGs) are used as the high-reflective mirror 12 and the low-reflective mirror 13.

In the fiber laser 1, at least a part of the reflection wavelength band of the high-reflective mirror 12 and at least a part of the reflection wavelength band of the low-reflective mirror 13 overlap. With this, the gain fiber 11, the high-reflective mirror 12, and the low-reflective mirror 13 constitute a resonator O that recursively amplifies laser light with wavelength $\lambda$ that belongs to the overlap between the two reflection wavelength bands. At wavelength $\lambda$, the reflectance of the low-reflective mirror 13 (e.g., not more than 15%) is lower than that of the high-reflective mirror 12 (e.g., not less than 95%). Thus, laser light with wavelength $\lambda$ that has been recursively amplified by the resonator O is outputted externally from the resonator O, mainly passing through the low-reflective mirror 13.

The forward pumping light source group 15a includes *ma* pumping light source or sources (*ma* is any natural number). Each pumping light source included in the forward pumping light source group 15a is configured to generate pumping light that belongs to the 976-nm band. As used herein, the 976-nm band refers to a wavelength band of not less than 967.9 nm and not more than 983.0 nm, in which the absorption band of Yb is included. The forward pumping combiner 14a is configured to input, into the gain fiber 11, pumping light generated by the respective pumping light sources included in the forward pumping light source group 15a. The forward pumping combiner 14a includes at least *ma* pumping light input port or ports 14a1, at least one visible light input port 14a2, and at least one resonator-side port 14a3. Every pumping light input port 14a1 is connected to the corresponding pumping light source constituting the forward pumping light source group 15a. The visible light input port 14a2 is connected to the input fiber 16a (by fusion splicing, in the present embodiment), and is for use in visual observation of the irradiation positions of laser light. It should be noted that the input of visible light into the visible light input port 14a2 is not essential, and the visible light input port 14a2 may be used as a port for inputting pumping light, or alternatively, may be used as a port for monitoring the amount of light reflected in a workpiece. The resonator-side port 14a3 is connected (by fusion splicing, in the present embodiment) to an end of the high-reflective mirror 12 on a side opposite to the gain fiber 11 side.

Forward pumping light generated in each pumping light source of the forward pumping light source group 15a is guided through the forward pumping combiner 14a and the high-reflective mirror 12 to the cladding of the gain fiber 11, in which the forward pumping light is used to cause transition of the state of Yb, with which the core of the gain fiber 11 is doped, to the population inversion state. Among spontaneous emission light waves generated in the gain fiber 11, a light wave with wavelength $\lambda$ that matches the reflection wavelengths of the high-reflective mirror 12 and the low-reflective mirror 13 is amplified by the resonator O in the core of the gain fiber 11. According to the present embodiment, as the forward pumping light source group 15a, a pumping light source group obtained by connecting six LD modules each including 13 laser diode (LD) chips is used (*ma*=78). Each LD chip is designed to have the oscillation wavelength band with a central wavelength of about 975 nm (absorption wavelength of Yb) and with a wavelength width of not less than 7 nm and not more than 12 nm. Fig. 1 depicts six LD modules constituting the forward pumping light source group 15a. Pumping light waves emitted from 13 LD chips, not illustrated, per LD module are coupled to a single optical fiber. That is, pumping light waves emitted from the 78 LD chips in total are combined in the forward pumping combiner 14a, and the combined light is coupled to the resonator-side port 14a3, which is a single optical fiber.

The backward pumping light source group 15b includes *mb* pumping light source or sources (*mb* is any natural number). Each pumping light source included in the backward pumping light source group 15b is configured to generate pumping light that belongs to the 976-nm band. The backward pumping combiner 14b is configured to input, into the gain fiber 11, pumping light generated by the respective pumping light sources included in the backward pumping light source group 15b. The backward pumping combiner 14b includes at least *mb* pumping light input port or ports 14b1, at least one signal light output port 14b2, and at least one resonator-side port 14b3. Every pumping light input port 14b1 is connected to the corresponding pumping light source constituting the backward pumping light source group 15b. The signal light output port 14b2 is connected to the output fiber 16b (by fusion splicing, in the present embodiment). The resonator-side port 14b3 is connected (by fusion splicing, in the present embodiment) to an end of the low-reflective mirror 13 on a side opposite to the gain fiber 11 side.

Backward pumping light generated in each pumping light source of the backward pumping light source group 15b is guided through the backward pumping combiner 14b and the low-reflective mirror 13 to the cladding of the gain fiber 11, in which the backward pumping light is used to cause transition of the state of Yb, with which the core of the gain fiber 11 is doped, to the population inversion state. Signal light (laser light) amplified by the core of the gain fiber 11 is guided through the low-reflective mirror 13 and the backward pumping combiner 14b to the output fiber 16b, and then output externally through the output fiber 16b. According to the present embodiment, as the backward pumping light source group 15b, a pumping light source group obtained by connecting six LD modules each including 13 laser diode (LD) chips is used (*mb*=78). Each LD chip is designed to have the oscillation wavelength band with a central wavelength of about 975 nm (absorption wavelength of Yb) and with a wavelength width of not less than 7 nm and not more than 12 nm. Fig. 1 depicts six LD modules constituting the backward pumping light source group 15b. Pumping light waves emitted from 13 LD chips, not illustrated, per LD module are coupled to a single optical fiber. That is, pumping light waves emitted from the 78 LD chips in total are combined in the backward pumping combiner 14b, and the combined light is coupled to the resonator-side port 14b3, which is a single optical fiber.

It should be noted that, in the present embodiment, the fiber laser 1 is realized as a fiber laser of a bidirectional pumping type which includes the forward pumping light source group 15a and the backward pumping light source group 15b; however, the present invention is not limited thereto. That is, the fiber laser 1 may be alternatively realized as a fiber laser of a unidirectional pumping type which includes only the forward pumping light source group 15a.

(Features of fiber laser)

Transverse mode instability (TMI) mainly occurs in section l1 of the gain fiber 11, the section l1 having a length of 1 m and including the end face on which forward pumping light is incident. This is because the absorption amount of forward pumping light in the section l1 is greater than that in an area other than the section l1, and thus, an amount of heat generated in this section l1 is greater than that in the area other that the section l1. Therefore, to prevent a decrease in beam output power caused by the TMI, it is necessary to reduce the absorption amount of forward pumping light in this section l1.

Thus, the inventors of the present invention prepared 436 fiber lasers 1 as samples, and carried out an acceptance test in which the following acceptance criteria is employed: whether or not the maximum output power of the laser output power, obtained as the total output power of the forward pumping light source group 15a and the backward pumping light source group 15b, is not less than 2070 W. Fig. 2 is a graph illustrating the relationship between the pumping light absorption amount in the section l1 and the rejection rate. The graph of Fig. 2 reveals that the rejection rate can be reduced to about half or less by reducing the absorption amount of forward pumping light in the section l1 to not more than 1100 W. The graph of Fig. 2 also reveals that the rejection rate can be reduced to about four-tenths or less by reducing the absorption amount of forward pumping light in the section l1 to not more than 1050 W. Further, the graph of Fig. 2 also reveals that the rejection rate can be reduced to about three-tenths or less by reducing the absorption amount of forward pumping light in the section l1 to not more than 1000 W.

It is preferable that the gain fiber 11 have a shorter length, in order to reduce stimulated Raman scattering. For example, when the effective cross-sectional area of the gain fiber 11 is 400 $\mu m^2$, it is preferable that the gain fiber 11 have a length of not more than 27 m. Here, when the effective cross-sectional area is 400 $\mu m^2$, the following (1) to (3) may tend to be appropriately achieved at the same time.

(1) The number of waveguide modes of light can be two, that is, light in LP01 mode and light in LP11 mode. Therefore, a decrease in beam quality due to the number of waveguide modes of light can be minimized.
(2) Bending loss in both the LP01 mode and the LP11 mode can be reduced.
(3) Because the effective cross-sectional area relatively increases, nonlinear optical effect can be effectively reduced.

Here, the effective cross-sectional area of the gain fiber 11 can be increased by increasing the core diameter of the gain fiber 11; however, the greater the core diameter is, the greater the V value is, so that even if the gain fiber 11 is bent, light in LP02 mode propagates. When light in the LP02 mode propagates through the gain fiber 11 in this way, this may cause the TMI. Further, although it is possible to increase the effective cross-sectional area by decreasing the relative refractive index difference of the core of the gain fiber 11, such a decrease in the relative refractive index difference of the core may increase the bending loss of the gain fiber 11, so that light in the LP01 mode and light in the LP11 mode, which are to be outputted as laser output light, may be susceptible to effects of the bending loss, resulting in increase in propagation losses of light in the LP01 mode and light in the LP11 mode.

Therefore, the value of the effective cross-sectional area that can appropriately achieve the abovementioned (1) to (3) at the same time can be 400 $\mu m^2$. In addition, when it is herein assumed that the length of the gain fiber 11 is L and the effective cross-sectional area is Aeff, and when the laser output power of the fiber laser 1 is targeted at 2 kW in a case in which the effective cross-sectional area of the gain fiber 11 is 400 $\mu m^2$, it is necessary to set L/Aeff, which is proportional to the nonlinear optical effect, to not more than 27 m/400 $\mu m^2$, in order to reduce the nonlinear optical effect. Thus, it is necessary to set the length of the gain fiber 11 to not more than 27 m from the viewpoint of reduction in the nonlinear optical effect.

Further, in order to reduce the overheating of each component, it is preferable to reduce residual pumping light, that is, it is preferable to increase the absorption amount of pumping light in the gain fiber 11. For example, as an example of the fiber laser 1, which is described later, when the total output power of the forward pumping light source group 15a is 1611 W, it is preferable to set the power of residual pumping light to not more than 16 W, that is, it is preferable to set the pumping light absorption amount in the gain fiber 11 to not less than 20 dB, from the viewpoint of ensuring the long-term reliable reduction in heat generated due to the residual pumping light. This value is obtained from an expression 10×log(Pout/Pin), using output power Pout of the residual pumping light and total output power Pin of the forward pumping light source group 15a, thereby calculating 10×log(16/1611)≈20dB. Here, in order to set, to not less than 20 dB, the pumping light absorption amount in the gain fiber 11 having a length of not more than 27 m to provide an effective cross-sectional area of 400 $\mu m^2$ as discussed above, it is necessary to set the absorption amount of pumping light per unit length to not less than 0.74 dB/m, so that it is necessary to set the absorption rate of pumping light per unit length to not less than 15.68%. This value is obtained from an expression of $(1-10^{\wedge}(0.74/10))\times100$, using absorption amount AA (dB/m) of pumping light per unit length, thereby calculating $(1-10^{\wedge}(0.74/10))\times100\approx15.68\%$. At this time, the absorption amount of forward pumping light in the abovementioned section I1 is not less than 253 W on the basis of the foregoing results. This value is obtained from an expression of $W\times AB/100$, using total output power W of the forward pumping light source group 15a and absorption amount AB (%) of pumping light per unit length, thereby calculating $1611\times15.68/100\approx253W$.

Taking into account the foregoing, the fiber laser 1 in accordance with the present embodiment employs a configuration in which the absorption amount of forward pumping light in the section I1 is not less than 253 W and not more than 1100 W. This allows the fiber laser 1 in accordance with the present embodiment to achieve advantageous effects that the probability of decrease in beam output power due to the TMI is reduced, and that the probability of occurrence of stimulated Raman scattering is reduced without overheating of each component.

It should be noted that, in the fiber laser 1, (1) as the absorption amount of forward pumping light in the section I1, a calculated absorption amount of not less than 253 W and not more than 1100 W may be used, or alternatively, (2) as the absorption amount of forward pumping light in the section I1, an actually measured value of the actually measured absorption amount of not less than 253 W and not more than 1100 W may be used. In both cases, the abovementioned effects are achieved.

Absorption amount X [W] of forward pumping light in the section I1 may be calculated according to $X=\int P(\lambda)A(\lambda)d\lambda$, using, for example, power spectrum $P(\lambda)$ [W] of forward pumping light outputted from the forward pumping light source group 15a and absorption rate spectrum $A(\lambda)$ [%/m] of Yb with which the core of the gain fiber 11 is doped.

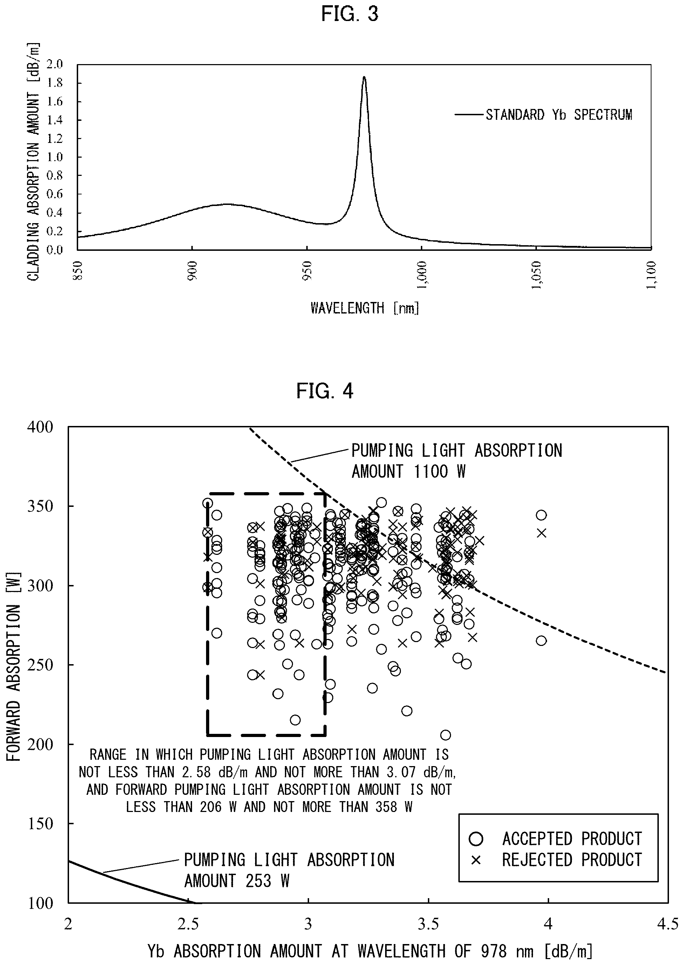

This absorption rate spectrum $A(\lambda)$ of Yb may be obtained by calculation, or alternatively, by actual measurement. When being obtained by calculation, the absorption rate spectrum $A(\lambda)$ of Yb can be calculated according to $A(\lambda)=A1(\lambda)\times A2$, using, for example, standard absorption rate spectrum $A1(\lambda)$[%/m] (theoretical value) of Yb normalized at the wavelength of 978 nm and absorption rate A2 [%/m] (actually measured value), at the wavelength of 978 nm, of Yb with which the core of the gain fiber 11 is doped. In this case, the absorption amount X [W] of forward pumping light in the section I1 is calculated according to $X=\int P(\lambda)A1(\lambda)A2d\lambda$. A standard absorption amount spectrum [dB/m] of Yb is illustrated in Fig. 3. The abovementioned standard absorption rate spectrum $A(\lambda)$ can be obtained by converting the absorption amount spectrum [dB/m] illustrated in Fig. 3 into the absorption rate spectrum [%/m] and by normalizing the obtained absorption rate spectrum [%/m] so that a value at the wavelength of 978 nm becomes 100%.

Instead of the configuration in which the absorption spectrum $A(\lambda)$ of Yb is calculated by using the absorption rate of Yb at the wavelength of 978 nm, a configuration in which the absorption spectrum $A(\lambda)$ of Yb is calculated by using an absorption rate of Yb at another wavelength (966 nm, 915 nm, etc.) may be employed. The reason why the absorption rate of Yb at the wavelength of 978 nm is used is that the difference between the wavelength of 978 nm and the wavelength of forward pumping light to be actually used is small, and thus, it is possible to more accurately calculate the absorption amount of forward pumping light in the section I1, compared to another wavelength. Actually, in a case in which the absorption rate of Yb at another absorption wavelength is used, the absorption rate can be measured with higher accuracy compared to a case in which the absorption rate at the wavelength of 978 nm is used, but an inaccurate absorption amount of forward pumping light in the section I1 is calculated due to a great difference between said another absorption wavelength and the wavelength of the forward pumping light to be actually used. It should be noted that the reason why the absorption rate of Yb at another absorption wavelength can be measured with higher accuracy is that the absorption amount is less than that at the wavelength of 978 nm; this enables a measurement using a long gain fiber, so that it is possible to reduce the effects of errors occurring when the cutback measurement is performed.

Further, the power spectrum $P(\lambda)$ of forward pumping light may be obtained by calculation, or alternatively, by actual measurement. When being obtained by calculation, the power spectrum $P(\lambda)$ of forward pumping light can be calculated according to $P(\lambda)=\sum_{i=1,2,...,ma}Pi(\lambda)$, using, for example, output power spectrum $Pi(\lambda)$ of each forward pumping light source included in the forward pumping light source group 15a. As the output power spectrum $Pi(\lambda)$ of each forward pumping light source, an actually measured distribution may be used, or alternatively, an approximate distribution (Gaussian distribution reproducing the central wavelength and the wavelength width of the actual power spectrum) may be used. In addition, when an LD module including multiple LD chips is used as the forward pumping light source as in the present embodiment, the output power spectrum $Pi(\lambda)$ of the LD module may be obtained as follows: that is, the representative value (an average value, a median value, etc.) of the central wavelengths of the respective LD chips is deemed as the central wavelength of the LD module, and the representative value of the wavelength widths of the respective LD chips is deemed as the wavelength width of the LD module, and then, the Gaussian distribution reproducing the central wavelength and the wavelength width is used as the output power spectrum $Pi(\lambda)$ of the LD module.

Fig. 4 is a graph illustrating, regarding fiber lasers 1 prepared as samples, the distribution of accepted products and rejected products, in which the horizontal axis represents the pumping light absorption amount [dB/m] per unit length of the gain fiber 11 at the wavelength of 978 nm (indicated in Fig. 4 by "Yb ABSORPTION AMOUNT AT WAVELENGTH OF 978 nm" [dB/m]), and the vertical axis represents the absorption amount of forward pumping light emitted from the forward pumping light source (LDM forward pumping light absorption amount) (indicated in Fig. 4 by "FORWARD ABSORPTION" [W]).

Fig. 4 reveals that the gain fiber 11 satisfying the following conditions has a rejection rate reduced to about half. That is, the conditions are that the absorption amount of forward pumping light emitted from the forward pumping light source (corresponding to "forward pumping light absorption amount (in other words, the LDM forward pumping light absorption amount)" in Fig. 4) is not less than 206 W and not more than 358 W, and the pumping light absorption amount per unit length of the gain fiber 11 at the wavelength of 978 nm (corresponding to the "pumping light absorption amount (in other words, the Yb absorption amount at 978 nm)" in Fig. 4) is not less than 2.58 dB/m and not more than 3.07 dB/m. Further, as to the gain fibers 11 satisfying the conditions, when an average output power of the laser output powers of the fiber lasers 1 each obtained by a total output power of both the forward pumping light source group 15a and the backward pumping light source group 15b is calculated by averaging values of output powers of the accepted products illustrated in Fig. 4, the average output power is 2110 W. In contrast, as to the gain fibers 11 failing to satisfy the conditions, when an average output power of the laser output power of the fiber laser 1 obtained by the total output power is calculated by averaging values of output power of the rejected products illustrated in Fig. 4, the average output power is 2068 W. Therefore, the gain fibers 11 satisfying the conditions have advantages in that they have greater average output power than that of the gain fibers 11 failing to satisfy the conditions (i.e., power consumption decreases in rated power operation). In Fig. 4, the solid line indicates a curve that represents data points where the absorption amount of forward pumping light (forward pumping light absorption amount) calculated by using $\int P(\lambda)A1(\lambda)A2d2\lambda$ is 253 W (i.e., a curve denoted in Fig. 4 as "PUMPING LIGHT ABSORPTION AMOUNT 253 W"), and the dotted line indicates a curve that represents data points where the absorption amount of forward pumping light (forward pumping light absorption amount) calculated by using $\int P(\lambda)A1(\lambda)A2d\lambda$ is 1100 W (i.e., a curve denoted in Fig. 4 as "PUMPING LIGHT ABSORPTION AMOUNT 1100 W"). Fig. 4 reveals that an area in which the abovementioned conditions are satisfied are located between these two curves. It is therefore understood that the condition "the absorption amount of forward pumping light calculated by using $\int P(\lambda)A1(\lambda)A2d\lambda$ is not less than 253 W and not more than 1100 W" is essentially satisfied when the abovementioned conditions are satisfied. Furthermore, as a value of the abovementioned absorption amount of forward pumping light emitted from the forward pumping light source (LDM forward pumping light absorption amount), a calculated value of the absorption amount of the forward pumping light calculated according to $\int P(\lambda)A1(\lambda)d\lambda$ may be used, or alternatively, a value obtained by dividing an actually measured value of the absorption amount of the forward pumping light by A2 may be used. Herein, A1($\lambda$) [%/m] (theoretical value) is a standard absorption rate spectrum of Yb normalized at the wavelength of 978 nm. A2 [%/m] (actually measured value) is an absorption rate, at the wavelength of 978 nm, of Yb with which the core of the gain fiber is doped.

(Examples of fiber laser)

As Examples and Comparative Examples of the fiber laser 1, eleven fiber lasers 1 were selected from the 436 fiber lasers 1 prepared as samples, and each of the selected fiber lasers 1 was evaluated for the following parameters, results of which are shown in Tables 1 to 11.

(1) Central wavelength [nm] of each LD module of the forward pumping light source group 15a ("LD central wavelength [nm]" of Tables 1 to 11)

(2) Wavelength width [nm] of each LD module of the forward pumping light source group 15a ("LD wavelength width [nm]" of Tables 1 to 11)

(3) Pumping light absorption amount [dB/m] per unit length of the gain fiber 11 at the wavelength of 978 nm (Yb "Yb 978-nm absorption amount [dB/m]" of Tables 1 to 11)

(4) Absorption amount [W], in the section I1, of forward pumping light outputted from each LD module of the forward pumping light source group 15a ("Forward absorption × 978 absorption amount [W]" of Tables 1 to 11)

(5) Absorption amount [W], in the section I1, of forward pumping light outputted from the forward pumping light source group 15a (calculated according to $\int P(\lambda)A1(\lambda)A2d\lambda$) ("Total absorption amount [W]" of Tables 1 to 11)

(6) Output power [W] of the forward pumping light source group 15a ("Pumping light output power [W]" of Tables 1 to 11)

(7) Output power [W] of the fiber laser 1 ("Output power [W]" of Tables 1 to 11)

(8) Results of the acceptance test ("Accepted/rejected" of Tables 1 to 11)

Regarding Items (4) and (5), it should be noted that, in some of Tables 1 to 11 below, the sum of the absorption amounts, in the section I1, of forward pumping light outputted from the respective LD modules of the forward pumping light source group 15a is not equal to the value of the absorption amount, in the section I1, of forward pumping light outputted from the forward pumping light source group 15a. This is because the absorption amounts, in the section I1, of forward pumping light outputted from the respective LD modules were obtained in a manner such that values are rounded up or down to the nearest whole numbers. Thus, in reviewing each of the Examples and the Comparative Examples, the sum of the absorption amounts, in the section I1, of forward pumping light outputted from the respective LD modules of the forward pumping light source group 15a and the value of the absorption amount, in the section I1, of forward pumping light outputted from the forward pumping light source group 15a may be deemed to be the same.

[Table 1]

| LDM Nos. | LD central wavelength [nm] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 2.62 | | 707 | 1548 | 2088 | Accepted |
| 1 | 973.6 | 7.7 | | 114 | | | | |
| 2 | 973.9 | 7.6 | | 120 | | | | |
| 3 | 973.9 | 8.0 | | 120 | | | | |
| 4 | 974.1 | 8.0 | | 124 | | | | |
| 5 | 974.1 | 8.3 | | 124 | | | | |
| 6 | 973.1 | 7.3 | | 104 | | | | |

[Table 2]

| LDM Nos. | LD central wavelength [nm] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| 1 | 974.0 | 8.2 | 2.62 | 122 | 815 | 1611 | 2161 | Accepted |
| 2 | 974.2 | 7.9 | | 126 | | | | |
| 3 | 974.6 | 7.8 | | 134 | | | | |
| 4 | 974.4 | 7.7 | | 131 | | | | |
| 5 | 975.6 | 8.0 | | 149 | | | | |
| 6 | 975.9 | 7.5 | | 152 | | | | |

[Table 3]

| LDM Nos. | LD central wavelength [nm] | LD wavelength width [nm] | Yb 978-nm absorption amount [dB/m] | Forward absorption × 978 absorption amount W | Total absorption amount [W] | Pumping light output power [W] | Output power [W] | Accepted /rejected |
|---|---|---|---|---|---|---|---|---|
| | | | 2.80 | | 910 | 1568 | 2200 | Accepted |
| 1 | 975.5 | 7.9 | | 159 | | | | |
| 2 | 975.9 | 8.8 | | 159 | | | | |
| 3 | 974.3 | 8.4 | | 137 | | | | |
| 4 | 974.6 | 8.8 | | 142 | | | | |
| 5 | 975. 8 | 9.1 | | 162 | | | | |
| 6 | 975.8 | 7.7 | | 152 | | | | |

[Table 4]

| LDM Nos. | LD central wavelength [nm] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 3.27 | | 1095 | 1544 | 2119 | Accepted |
| 1 | 976.3 | 10.9 | | 180 | | | | |
| 2 | 978.2 | 7.5 | | 178 | | | | |
| 3 | 978.0 | 9.0 | | 177 | | | | |
| 4 | 976.1 | 8.6 | | 188 | | | | |
| 5 | 977.4 | 9.1 | | 184 | | | | |
| 6 | 977.1 | 8.6 | | 188 | | | | |

[Table 5]

| LDM Nos. | LD central wavelength [nm] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 2.95 | | 1003 | 1596 | 2145 | Accepted |
| 1 | 977.0 | 8.2 | | 171 | | | | |
| 2 | 977.4 | 8.5 | | 168 | | | | |
| 3 | 977.6 | 7.5 | | 170 | | | | |
| 4 | 978.0 | 8.4 | | 161 | | | | |
| 5 | 978.0 | 8.0 | | 162 | | | | |
| 6 | 976.0 | 7.7 | | 172 | | | | |

[Table 6]

| LDM Nos. | LD central wavelength [nm] | LD wavelength width [nm] | Yb 978-run absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 2.95 | | 634 | 1595 | 2188 | Accepted |
| 1 | 971.9 | 7.9 | | 94 | | | | |
| 2 | 972.2 | 7.6 | | 99 | | | | |
| 3 | 972.8 | 7.5 | | 110 | | | | |
| 4 | 972.9 | 7.7 | | 113 | | | | |
| 5 | 972.7 | 7.4 | | 108 | | | | |
| 6 | 972.8 | 7.6 | | 110 | | | | |

[Table 7]

| LDM Nos. | LD central wavelength [nm] | LD wavelength width [nm] | Yb 978-run absorption amount [dB/m] | Forward absorption × 978 absorption amount [W] | Total absorption amount [W] | Pumping light output power [W] | Output power [W] | Accepted I rejected |
|---|---|---|---|---|---|---|---|---|
| | | | 2.80 | | 897 | 1579 | 2161 | Accepted |
| 1 | 974.8 | 7.2 | | 148 | | | | |
| 2 | 975.0 | 8.4 | | 149 | | | | |
| 3 | 974.6 | 8.0 | | 143 | | | | |
| 4 | 976.3 | 10.4 | | 155 | | | | |
| 5 | 975.9 | 8.2 | | 161 | | | | |
| 6 | 975.0 | 12.0 | | 141 | | | | |

[Table 8]

| LDM Nos. | LD central wavelength [run] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 2.77 | | 931 | 1517 | 2106 | Accepted |
| 1 | 975.9 | 9.9 | | 153 | | | | |
| 2 | 975.1 | 7.8 | | 150 | | | | |
| 3 | 976.7 | 10.4 | | 154 | | | | |
| 4 | 975.6 | 8.1 | | 157 | | | | |
| 5 | 975.7 | 8.2 | | 158 | | | | |
| 6 | 975.6 | 7.6 | | 159 | | | | |

EP 4 300 728 A1

[Table 9]

| LDM Nos. | LD central wavelength [run] | LD wavelength width [nm] | Yb 978-nm absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
|  |  |  | 2.95 |  | 859 | 1509 | 2150 | Accepted |
| 1 | 973.6 | 13.8 |  | 127 |  |  |  |  |
| 2 | 974.2 | 8.3 |  | 142 |  |  |  |  |
| 3 | 977.7 | 9.8 |  | 161 |  |  |  |  |
| 4 | 973.8 | 8.3 |  | 133 |  |  |  |  |
| 5 | 974.1 | 7.6 |  | 140 |  |  |  |  |
| 6 | 975.1 | 9.9 |  | 155 |  |  |  |  |

EP 4 300 728 A1

[Table 10]

| LDM Nos. | LD central wavelength [mn] | LD wavelength width [nm] | Yb 978-run absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
| | | | 3.97 | | 1323 | 1573 | 1942 | Rejected |
| 1 | 979.1 | 8.0 | | 191 | | | | |
| 2 | 977.7 | 9.9 | | 216 | | | | |
| 3 | 976.1 | 8.7 | | 228 | | | | |
| 4 | 977.4 | 8.0 | | 229 | | | | |
| 5 | 976.9 | 8.4 | | 230 | | | | |
| 6 | 976.7 | 8.8 | | 229 | | | | |

[Table 11]

| LDM Nos. | LD central wavelength [nm] | LD wavelength width [run] | Yb 978-run absorption amount [dB/m] | Forward absorption × 978 absorption amount [W] | Total absorption amount [W] | Pumping light output power [W] | Output power [W] | Accepted /rejected |
|---|---|---|---|---|---|---|---|---|
|  |  |  | 3.59 |  | 1203 | 1565 | 2010 | Rejected |
| 1 | 977.4 | 8.6 |  | 204 |  |  |  |  |
| 2 | 977.6 | 7.8 |  | 205 |  |  |  |  |
| 3 | 977.9 | 7.5 |  | 201 |  |  |  |  |
| 4 | 978.0 | 8.1 |  | 197 |  |  |  |  |
| 5 | 978.7 | 7.7 |  | 184 |  |  |  |  |
| 6 | 977.0 | 7.5 |  | 212 |  |  |  |  |

Since each of the fiber lasers 1 shown in Tables 1 to 9 satisfies the condition that the absorption amount of forward pumping light in the section I1 is not less than 253 W and not more than 1100 W, these fiber lasers 1 are Examples. Since each of the fiber lasers 1 shown in Tables 10 and 11 fails to satisfy the condition that the absorption amount of forward pumping light in the section I1 is not less than 253 W and not more than 1100 W, these fiber lasers 1 are Comparative Examples. It can be seen from the Tables that the fiber lasers 1 of the Examples were determined to be accepted products, whereas the fiber lasers 1 of the Comparative Examples were determined to be rejected products.

Further, each of the fiber lasers 1 which were determined to be accepted products has an absorption amount, in the section I, of forward pumping light outputted from the forward pumping light source group 15a of not less than 634 W/m. Thus, the Examples suggest that the absorption amount of forward pumping light in the section I may be preferably not less than 634 W/m, in order to reduce the rejection rate (i.e., in order to reduce the probability of a decrease in beam output power caused by the TMI).

Furthermore, regarding the fiber lasers 1 which were determined to be accepted products, the total power of forward pumping light, that is, the output power of the forward pumping light source group 15a is not less than 1509 W. Thus, the Examples suggest that the total power of forward pumping light may be preferably not less than 1509 W, in order to reduce the rejection rate (i.e., in order to reduce the probability of a decrease in beam output power caused by the TMI).

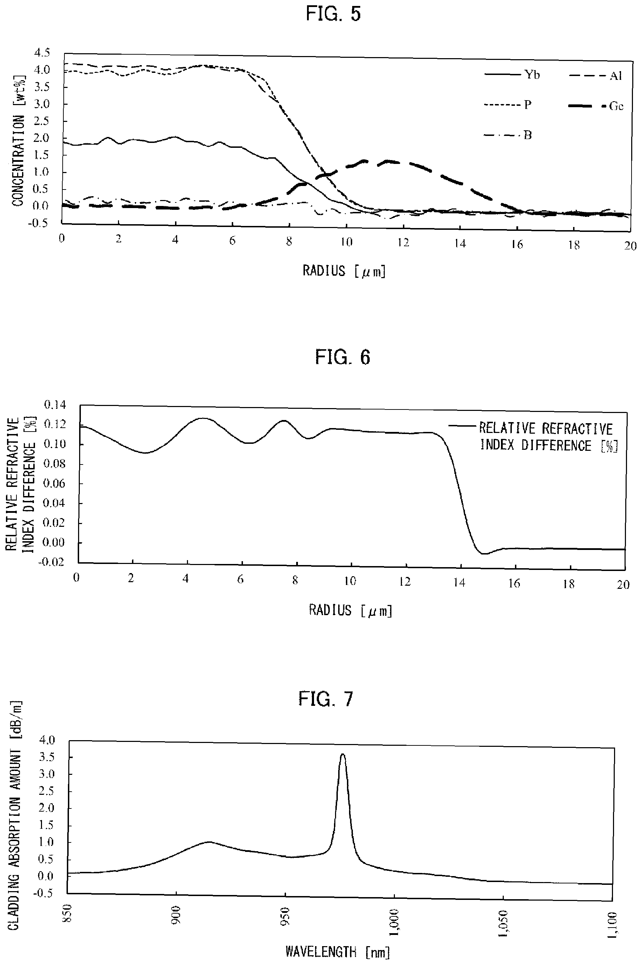

Fig. 5 is a graph illustrating the concentration distribution of each element in the gain fiber 11 in accordance with the example shown in Table 8. Fig. 6 is a graph illustrating the distribution of refractive index of the gain fiber 11 in accordance with the Example shown in Table 8. As illustrated in Fig. 5, the gain fiber 11 has a partiallydoped structure including an Yb, Al, P, and B-doped area at the center, and a Ge-doped area on the outside of the Yb, Al, P, and B-doped area. The concentrations of these elements are adjusted so that the core has a constant refractive index in their entireties, as illustrated in Fig. 5. Fig. 7 is a graph illustrating the cladding absorption amount spectrum [dB/m] of the gain fiber 11 in accordance with the Example shown in Table 8. The shape of the cladding absorption amount spectrum is substantially identical to that of the standard absorption amount spectrum [dB/m] of Yb illustrated in Fig. 3.

(Summary)

A fiber laser in accordance with Aspect 1 of the present invention employs a configuration in which the fiber laser includes: a gain fiber having a core doped with Yb; and a forward pumping light source group capable of generating forward pumping light that is capable of being inputted into the gain fiber and that belongs to a 976-nm band, wherein an absorption amount of the forward pumping light in a section of the gain fiber, the section having a length of 1 m and including an end face on which the forward pumping light is incident, is not less than 253 W and not more than 1100 W as calculated according to $\int P(\lambda)A(\lambda)d\lambda$.

Herein, $P(\lambda)$ [W] is a power spectrum of the forward pumping light, and $A(\lambda)$ [%/m] is an absorption rate spectrum of Yb with which the core of the gain fiber is doped.

A fiber laser in accordance with Aspect 2 of the present invention employs, in addition to the configuration of Aspect 1, a configuration in which the absorption rate spectrum $A(\lambda)$ is calculated according to $A(\lambda)=A1(\lambda)\times A2$.

Herein, $A1(\lambda)$ [%/m] is a standard absorption rate spectrum of Yb normalized at a wavelength of 978 nm, and $A2$ [%/m] is an absorption rate, at the wavelength of 978 nm, of Yb with which the core of the gain fiber is doped.

A fiber laser in accordance with Aspect 3 of the present invention employs, in addition to the configuration of Aspect 1 or 2, a configuration in which the absorption amount of the forward pumping light in the section is not less than 634 W/m.

A fiber laser in accordance with Aspect 4 of the present invention employs, in addition to the configuration of any one of Aspects 1 to 3, a configuration in which the forward pumping light has a total power of not less than 1509 W.

A fiber laser in accordance with Aspect 5 of the present invention employs, in addition to the configuration of any one of Aspects 1 to 4, a configuration in which a value of an absorption amount of the forward pumping light emitted from the forward pumping light source group is not less than 206 W and not more than 358 W, when the value is a value obtained by calculating the absorption amount of the forward pumping light according to $\int P(\lambda)A1(\lambda)d\lambda$ or a value obtained by dividing an actually measured value of the absorption amount of the forward pumping light by A2, wherein a pumping light absorption amount per unit length of the gain fiber at a wavelength of 978 nm is not less than 2.58 dB/m and not more than 3.07 dB/m.

Herein, $A1(\lambda)$ [%/m] is a standard absorption rate spectrum of Yb normalized at the wavelength of 978 nm, and $A2$ [%/m] is an absorption rate, at the wavelength of 978 nm, of Yb with which the core of the gain fiber is doped.

A fiber laser in accordance with Aspect 6 of the present invention employs, in addition to the configuration of any one of Aspects 1 to 5, a configuration in which the gain fiber includes no fusion-spliced point, and has a constant refractive index distribution and a constant Yb concentration throughout its length.

A fiber laser in accordance with Aspect 7 of the present invention employs a configuration in which the fiber laser including: a gain fiber having a core doped with Yb; and a forward pumping light source group capable of generating forward pumping light that is capable of being inputted into the gain fiber and that belongs to a 976-nm band, wherein an absorption amount of the forward pumping light in a section of the gain fiber, the section having a length of 1 m and including an end face on which the forward pumping light is incident, is not less than 253 W and not more than 1100 W, when the absorption amount of the forward pumping light in the section is an actually measured value of the absorption amount of the forward pumping light.

A fiber laser in accordance with Aspect 8 of the present invention employs, in addition to the configuration of Aspect 7, a configuration in which the absorption amount of the forward pumping light in the section is not less than 634 W/m.

A fiber laser in accordance with Aspect 9 of the present invention employs, in addition to the configuration of Aspect 7 or 8, a configuration in which the forward pumping light has a total power of not less than 1509 W.

A fiber laser in accordance with Aspect 10 of the present invention employs, in addition to the configuration of any one of Aspects 7 to 9, a configuration in which a value of an absorption amount of the forward pumping light emitted from the forward pumping light source group is not less than 206 W and not more than 358 W, when the value is a value obtained by calculating the absorption amount of the forward pumping light according to $\int P(\lambda)A1(\lambda)d\lambda$ or a value obtained by dividing an actually measured value of the absorption amount of the forward pumping light by A2, wherein a pumping light absorption amount per unit length of the gain fiber at a wavelength of 978 nm is not less than 2.58 dB/m and not more than 3.07 dB/m.

Herein, A1($\lambda$) [%/m] is a standard absorption rate spectrum of Yb normalized at the wavelength of 978 nm, and A2 [%/m] is an absorption rate, at the wavelength of 978 nm, of Yb with which the core of the gain fiber is doped.

(Supplementary notes)

The present invention is not limited to the foregoing embodiments, but can be modified by a person skilled in the art within the scope of the claims. The present invention also encompasses, in its technical scope, any embodiment derived by combining technical means disclosed in the foregoing embodiments.

Reference Signs List

| | |
|---|---|
| 1 | Fiber laser |
| 11 | Gain fiber |
| 12 | High-reflective mirror |
| 13 | Low-reflective mirror |
| 14a | Forward pumping combiner |
| 14b | Backward pumping combiner |
| 15a | Forward pumping light source group |
| 15b | Backward pumping light source group |
| 16a | Input fiber |
| 16b | Output fiber |

**Claims**

1. A fiber laser comprising: a gain fiber having a core doped with Yb; and a forward pumping light source group capable of generating forward pumping light that is capable of being inputted into the gain fiber and that belongs to a 976-nm band,

    wherein an absorption amount of the forward pumping light in a section of the gain fiber, the section having a length of 1 m and including an end face on which the forward pumping light is incident, is not less than 253 W and not more than 1100 W as calculated according to $\int P(\lambda)A(\lambda)d\lambda$,
    wherein P($\lambda$) [W] is a power spectrum of the forward pumping light, and A($\lambda$) [%/m] is an absorption rate spectrum of Yb with which the core of the gain fiber is doped.

2. The fiber laser according to claim 1, wherein the absorption rate spectrum A($\lambda$) is calculated according to

$$A(\lambda) = A1(\lambda) \times A2,$$

wherein A1($\lambda$) [%/m] is a standard absorption rate spectrum of Yb normalized at a wavelength of 978 nm, and A2 [%/m] is an absorption rate, at the wavelength of 978 nm, of Yb with which the core of the gain fiber is doped.

3. The fiber laser according to claim 1 or 2, wherein the absorption amount of the forward pumping light in the section is not less than 634 W/m.

4. The fiber laser according to any one of claims 1 to 3, wherein the forward pumping light has a total power of not less than 1509 W.

5. The fiber laser according to any one of claims 1 to 4, wherein a value of an absorption amount of the forward pumping light emitted from the forward pumping light source group is not less than 206 W and not more than 358 W, when the value is a value obtained by calculating the absorption amount of the forward pumping light according to $\int P(\lambda)A1(\lambda)d\lambda$ or a value obtained by dividing an actually measured value of the absorption amount of the forward pumping light by A2,

   wherein a pumping light absorption amount per unit length of the gain fiber at a wavelength of 978 nm is not less than 2.58 dB/m and not more than 3.07 dB/m,
   wherein A1($\lambda$) [%/m] is a standard absorption rate spectrum of Yb normalized at the wavelength of 978 nm, and A2 [%/m] is an absorption rate, at the wavelength of 978 nm, of Yb with which the core of the gain fiber is doped.

6. The fiber laser according to any one of claims 1 to 5, wherein the gain fiber includes no fusion-spliced point, and has a constant refractive index distribution and a constant Yb concentration throughout its length.

7. A fiber laser comprising: a gain fiber having a core doped with Yb; and a forward pumping light source group capable of generating forward pumping light that is capable of being inputted into the gain fiber and that belongs to a 976-nm band,
   wherein an absorption amount of the forward pumping light in a section of the gain fiber, the section having a length of 1 m and including an end face on which the forward pumping light is incident, is not less than 253 W and not more than 1100 W, when the absorption amount of the forward pumping light in the section is an actually measured value of the absorption amount of the forward pumping light.

8. The fiber laser according to claim 7, wherein the absorption amount of the forward pumping light in the section is not less than 634 W/m.

9. The fiber laser according to claim 7 or 8, wherein the forward pumping light has a total power of not less than 1509 W.

10. The fiber laser according to any one of claims 7 to 9, wherein a value of an absorption amount of the forward pumping light emitted from the forward pumping light source group is not less than 206 W and not more than 358 W, when the value is a value obtained by calculating the absorption amount of the forward pumping light according to $\int P(\lambda)A1(\lambda)d\lambda$ or a value obtained by dividing an actually measured value of the absorption amount of the forward pumping light by A2,

   wherein a pumping light absorption amount per unit length of the gain fiber at a wavelength of 978 nm is not less than 2.58 dB/m and not more than 3.07 dB/m,
   wherein A1($\lambda$) [%/m] is a standard absorption rate spectrum of Yb normalized at the wavelength of 978 nm, and A2 [%/m] is an absorption rate, at the wavelength of 978 nm, of Yb with which the core of the gain fiber is doped.

# FIG. 1

# FIG. 2

## FIG. 3

## FIG. 4

## FIG. 5

## FIG. 6

## FIG. 7

## INTERNATIONAL SEARCH REPORT

| International application No. |
|---|
| **PCT/JP2021/043717** |

**A. CLASSIFICATION OF SUBJECT MATTER**

*H01S 3/067*(2006.01)i
FI:  H01S3/067

According to International Patent Classification (IPC) or to both national classification and IPC

**B. FIELDS SEARCHED**

Minimum documentation searched (classification system followed by classification symbols)

H01S3/067, G02B6/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-179404 A (FUJIKURA LIMITED) 25 September 2014 (2014-09-25) paragraphs [0030]-[0041], [0046]-[0055], [0078]-[0081], fig. 1-2, 5 | 1-4, 6-9 |
| A | | 5, 10 |
| Y | JP 2020-167294 A (FUJIKURA LIMITED) 08 October 2020 (2020-10-08) paragraphs [0016]-[0017], [0029]-[0046], fig. 1, 5 | 1-4, 6-9 |
| A | | 5, 10 |
| A | JP 2012-243789 A (MIYACHI TECHNOS CORPORATION) 10 December 2012 (2012-12-10) entire text, all drawings | 1-10 |
| A | JP 2012-238781 A (MITSUBISHI ELECTRIC CORPORATION) 06 December 2012 (2012-12-06) entire text, all drawings | 1-10 |
| A | WO 2012/165389 A1 (FURUKAWA ELECTRIC COMPANY, LIMITED) 06 December 2012 (2012-12-06) entire text, all drawings | 1-10 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**16 December 2021** | Date of mailing of the international search report<br><br>**11 January 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

EP 4 300 728 A1

**INTERNATIONAL SEARCH REPORT**

International application No.

**PCT/JP2021/043717**

C.     DOCUMENTS CONSIDERED TO BE RELEVANT

| Category* | Citation of document, with indication, where appropriate, of the relevant passages | Relevant to claim No. |
|---|---|---|
| A | JP 2013-537002 A (OFS FITEL, LIMITED LIABILITY COMPANY) 26 September 2013 (2013-09-26)<br>entire text, all drawings | 1-10 |
| A | CN 111934179 A (NATIONAL UNIVERSITY OF DEFENSE TECHNOLOGY OF PLA) 13 November 2020 (2020-11-13)<br>entire text, all drawings | 1-10 |
| A | JP 2014-49763 A (OFS FITEL, LIMITED LIABILITY COMPANY) 17 March 2014 (2014-03-17)<br>entire text, all drawings | 1-10 |
| A | JP 2007-510182 A (CORNING INCORPORATED) 19 April 2007 (2007-04-19)<br>entire text, all drawings | 1-10 |
| A | US 2019/0341737 A1 (THE BOARD OF TRUSTEES OF THE UNIVERSITY OF ILLINOIS) 07 November 2019 (2019-11-07)<br>entire text, all drawings | 1-10 |

Form PCT/ISA/210 (second sheet) (January 2015)

**INTERNATIONAL SEARCH REPORT**
**Information on patent family members**

International application No.

**PCT/JP2021/043717**

| Patent document cited in search report | | | Publication date (day/month/year) | Patent family member(s) | | | Publication date (day/month/year) |
|---|---|---|---|---|---|---|---|
| JP | 2014-179404 | A | 25 September 2014 | US 2016/0043525 A1 paragraphs [0037]-[0048], [0053]-[0062], [0087]-[0089], fig. 1-2, 5 WO 2014/142010 A1 | | | |
| JP | 2020-167294 | A | 08 October 2020 | WO 2020/203136 A1 paragraphs [0016]-[0017], [0029]-[0046], fig. 1, 5 | | | |
| JP | 2012-243789 | A | 10 December 2012 | (Family: none) | | | |
| JP | 2012-238781 | A | 06 December 2012 | (Family: none) | | | |
| WO | 2012/165389 | A1 | 06 December 2012 | (Family: none) | | | |
| JP | 2013-537002 | A | 26 September 2013 | US 2013/0161295 A1 entire text, all drawings WO 2012/031221 A1 | | | |
| CN | 111934179 | A | 13 November 2020 | (Family: none) | | | |
| JP | 2014-49763 | A | 17 March 2014 | US 2014/0212103 A1 entire text, all drawings EP 2703853 A1 CN 103675991 A | | | |
| JP | 2007-510182 | A | 19 April 2007 | US 2004/0258377 A1 entire text, all drawings WO 2004/113978 A1 AU 2004307401 A1 TW 200528781 A EP 1636619 A1 CN 1809771 A | | | |
| US | 2019/0341737 | A1 | 07 November 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **C. JAUREGUI et al.** Physical origin of mode instabilities in high-power fiber laser systems. *Opt. Express,* 2012, vol. 20 (12), 12912-12925